(19) Europäisches Patentamt / European Patent Office / Office européen des brevets

(11) **EP 1 988 419 A1**

(12) **EUROPÄISCHE PATENTANMELDUNG**

(43) Veröffentlichungstag:
    **05.11.2008 Patentblatt 2008/45**

(51) Int Cl.:
    *G02B 27/18* [(2006.01)]    *H04N 9/31* [(2006.01)]

(21) Anmeldenummer: **08153447.1**

(22) Anmeldetag: **27.03.2008**

(84) Benannte Vertragsstaaten:
    **AT BE BG CH CY CZ DE DK EE ES FI FR GB GR HR HU IE IS IT LI LT LU LV MC MT NL NO PL PT RO SE SI SK TR**
    Benannte Erstreckungsstaaten:
    **AL BA MK RS**

(30) Priorität: **30.04.2007  DE 102007020289**
                **26.07.2007  DE 102007034958**

(71) Anmelder: **OSRAM Opto Semiconductors GmbH 93055 Regensburg (DE)**

(72) Erfinder:
    • **Schwarz, Thomas**
      **93055 Regensburg (DE)**
    • **Schulz, Roland**
      **93059 Regensburg (DE)**

(74) Vertreter: **Epping - Hermann - Fischer Patentanwaltsgesellschaft mbH Ridlerstrasse 55 80339 München (DE)**

(54) **Strahlenkombinator für ein mehrfarbiges Laserdisplay**

(57)    Es wird ein Strahlenkombinator für ein mehrfarbiges Laserdisplay mit einer optischen Lichtquelle (1), die mindestens zwei Halbleiterlaser (11, 13) aufweist, angegeben, bei dem der Strahlenkombinator eine Linse (14) aufweist und die Linse (14) in einem Strahlengang angeordnet ist, der von emittierten Strahlen der mindestens zwei Halbleiterlaser (11, 13) gebildet ist.

**Fig. 1**

**Beschreibung**

Die Erfindung betrifft einen Strahlenkombinator für ein mehrfarbiges Laserdisplay und ein mehrfarbiges Laserdisplay mit einem Strahlenkombinator.

Diese Patentanmeldung beansprucht die Priorität der deutschen Patentanmeldungen 102007034958.2 und 102007020289.1, deren Offenbarungsgehalt hiermit durch Rückbezug aufgenommen wird.

Bei einem mehrfarbigen Laserdisplay werden von einer Laserlichtquelle emittierte Laserstrahlen beispielsweise auf einen Schirm projiziert, um ein mehrfarbiges Bild anzuzeigen. Die Laser der Laserlichtquelle emittieren beispielsweise Laserstrahlen in den Farben rot, grün und blau. Um das mehrfarbige Bild in einer guten Qualität anzuzeigen, sollten die projizierten Laserstrahlen eine gute Strahldeckung auf dem Schirm aufweisen. Die Laserstrahlen werden zum Beispiel mit einem Strahlvereiniger vereinigt und auf den Schirm projiziert, um das mehrfarbige Bild anzuzeigen.

Als Strahlvereiniger kann ein Prismen-Strahlvereiniger eingesetzt werden. Ein Prismen-Strahlvereiniger ist beispielsweise aus dem Dokument US 6,154,259 A bekannt. Die Seitenflächen der Prismen weisen verschiedene dielektrische Beschichtungen auf, deren Reflexion und Transmission derart eingestellt ist, dass die verschiedenen Farben an verschiedenen Seitenflächen des Prismen-Strahlvereinigers eingekoppelt werden. Zum Beispiel werden rote, grüne und blaue Strahlen an drei verschiedenen Seitenflächen eingekoppelt. An einer vierten Seitenfläche treten die drei Strahlen vereinigt aus dem Prismen-Strahlvereiniger aus, um zum Beispiel auf einen Schirm projiziert zu werden.

Eine Strahlvereinigung kann auch mit Strahlvereinigerplättchen erreicht werden. Zur Strahlvereinigung werden hierbei dielektrisch beschichtete Glasplättchen verwendet. Mindestens zwei verschiedenfarbige Strahlen, die aus zwei unter einem Winkel von 90° zueinander stehenden Richtungen am Strahlvereinigerplättchen eintreffen, werden vereinigt. Dabei wird zum Beispiel ein Strahl der einen Farbe reflektiert und ein Strahl der anderen Farbe transmittiert.

Strahlvereiniger mit dichroitischen Spiegeln zum Vereinigen von Strahlen sind beispielsweise aus dem Dokument US 6,426,781 B1 bekannt.

Es ist eine Aufgabe der Erfindung, einen Strahlenkombinator für ein mehrfarbiges Laserdisplay anzugeben, bei dem auf vergleichsweise einfache Weise, insbesondere mit möglichst wenigen Komponenten, eine Strahldeckung der emittierten Strahlen erreicht wird. Weiterhin soll ein mehrfarbiges Laserdisplay mit einem verbesserten Strahlenkombinator angegeben werden.

Diese Aufgabe wird erfindungsgemäß durch einen Strahlenkombinator für ein mehrfarbiges Laserdisplay gemäß Patentanspruch 1 und ein mehrfarbiges Laserdisplay gemäß Patentanspruch 25 gelöst. Vorteilhafte Ausgestaltungen und Weiterbildungen der Erfindung sind Gegenstand der abhängigen Ansprüche.

Der Strahlenkombinator für ein mehrfarbiges Laserdisplay umfasst eine optische Lichtquelle, die mindestens zwei Halbleiterlaser aufweist. Die emittierten Strahlen der Halbleiterlaser weisen unterschiedliche Wellenlängen auf, sind also verschiedenfarbig. Insbesondere kann die optische Lichtquelle drei Halbleiterlaser aufweisen, die Strahlen der Farben rot, grün und blau emittieren.

Der Strahlenkombinator enthält eine Linse, die in dem Strahlengang angeordnet ist, der von den emittierten Strahlen der mindestens zwei Halbleiterlaser gebildet ist. Mittels der Linse werden die Strahlen der Halbleiterlaser bevorzugt zu einer zumindest teilweisen Strahldeckung gebracht.

Der Strahlenkombinator hat einen vorteilhaft einfachen Aufbau, wobei nur wenige Komponenten, vorzugsweise nur eine einzige Linse, eingesetzt werden. Somit ist auch eine einfache Justierung des Strahlenkombinators möglich. Weitere Vorteile sind die vergleichsweise geringen Kosten zum Herstellen des Strahlenkombinators sowie auch dessen geringe Baugröße.

Die mindestens zwei Halbleiterlaser weisen jeweils Emissionspunkte auf, die in einer vorteilhaften Ausführungsform einen Abstand von weniger als 500 $\mu$m voneinander und/oder von einer optischen Achse der Linse aufweisen. Unter dem Emissionspunkt des Halbleiterlasers wird der Punkt verstanden, an dem der Mittelpunkt des emittierten Laserstrahls aus dem Halbleiterkörper des Halbleiterlasers austritt. Bevorzugt weisen die Emissionspunkte der Halbleiterlaser einen Abstand von weniger als 100 $\mu$m voneinander und/oder von der optischen Achse der Linse auf. Durch einen geringen Abstand der jeweiligen Emissionspunkte von der optischen Achse wird es erleichtert, die emittierten Strahlen durch die Linse zur Strahldeckung zu bringen. Die Strahldeckung wird verbessert, wenn der Abstand der Emissionspunkte verkleinert wird. Es ist möglich, dass die Strahlen die Linse mit einem Strahlfehlwinkel verlassen, wobei unter dem Strahlfehlwinkel der Winkel zwischen dem Strahl und einer optischen Achse der Linse verstanden wird. Der Strahlfehlwinkel ist umso kleiner, je kleiner der Abstand der Emissionspunkte von der optischen Achse ist oder je größer die Brennweite der Linse ist.

Weiterhin ist es vorteilhaft, wenn die Linse in einem geringen Abstand von den Emissionspunkten der Halbleiterlaser angeordnet ist. Bevorzugt beträgt ein Abstand zwischen den Emissionspunkten der Halbleiterlaser und der Linse 5 mm oder weniger, besonders bevorzugt 3 mm oder weniger.

In einer weiteren vorteilhaften Ausführungsform ist in dem Strahlengang nach der Linse ein Prisma angeordnet. Nach einem Durchgang durch das Prisma sind die Strahlen vorzugsweise parallel. Es ist auch möglich, das Prisma so auszubilden oder anzuordnen, dass die Strahlen beim Austritt aus dem Prisma eine vorbestimmte Strahldivergenz aufweisen.

In einer weiteren vorteilhaften Ausführungsform ist nach der Linse eine doppelbrechende Platte, insbesondere aus doppelbrechendem Glas, in dem Strahlengang angeordnet. Die emittierten Strahlen der Halbleiterlaser, beispielsweise zwei Halbleiterlaser, weisen eine um 90° unterschiedliche Polarisationsrichtung auf. Beim Durchgang der Strahlen durch die Platte wird aufgrund der Doppelbrechung einer der Strahlen stärker gebrochen als der andere Strahl, so dass die Strahlen nach dem Durchgang durch die Platte vorzugsweise parallel zueinander sind. Es ist auch möglich, dass die Strahlen nach dem Durchgang durch die Platte aus doppelbrechendem Glas mit einem vorbestimmten Strahlfehlwinkel auseinander laufen.

In einer weiteren vorteilhaften Ausführungsform ist nach der Linse in dem Strahlengang eine weitere Linse angeordnet, die als Kollimator wirkt. Nach dem Durchgang durch die weitere Linse sind die Strahlen vorzugsweise parallel oder weisen einen vorbestimmten Strahlfehlwinkel auf.

In einer weiteren Ausführungsform ist nach der Linse in dem Strahlengang ein beugendes Element angeordnet. Die Strahlen werden durch das beugende Element abhängig von der Wellenlänge unterschiedlich gebeugt, sodass sie nach dem Verlassen des beugenden Elements vorzugsweise parallel zueinander sind oder einen vorbestimmten Strahlfehlwinkel aufweisen. Das beugende Element kann ein an der Oberfläche beugendes Element, beispielsweise ein Gitter oder ein Oberflächenhologramm sein, oder ein im Volumen beugendes Element, zum Beispiel ein Volumenhologramm.

Bei Strahlen unterschiedlicher Wellenlänge können die Positionen der Brennpunkte der Linse aufgrund der Dispersion des Materials der Linse, beispielsweise Glas oder Kunststoff, verschieden sein. In einer vorteilhaften Ausführungsform ist die Linse eine achromatische Linse, sodass der Effekt der Dispersion vermindert oder sogar vollständig eliminiert wird. Eine achromatische Linse enthält zur Verminderung der chromatischen Aberration eine Kombination aus mindestens zwei Glastypen. Die Brennpunkte der Linse für die verschiedenen Wellenlängen der mehreren Halbleiterlaser liegen in diesem Fall vorteilhaft in einer Ebene oder zumindest nahezu in einer Ebene.

Die Linse kann zum Beispiel eine sphärische Linse oder eine asphärische Linse sein. Bevorzugt weist die Linse zumindest eine Freiformfläche auf, die es vorteilhaft ermöglicht, die optischen Eigenschaften der Linse gezielt an die Anordnung der Halbleiterlaser in der optischen Lichtquelle anzupassen, um eine gute Strahldeckung der emittierten Laserstrahlen zu erzielen. Eine für die jeweilige optische Lichtquelle geeignete Freiformfläche der Linse kann für eine vorgegebene geometrische Anordnung der Halbleiterlaser und der Linse sowie vorgegebene Wellenlängen der emittierten Laserstrahlen mittels Simulationsrechnungen bestimmt werden.

Bei einer weiteren Ausführungsform ist die Linse ein diffraktives optisches Element (DOE). Bei dem als Linse fungierenden diffraktiven optischen Element handelt es vorzugsweise um eine Glas- oder Kunststoffplatte, die mit beugenden Oberflächenstrukturen versehen ist. Die Oberflächenstrukturen weisen dabei Abmessungen auf, die in der Regel kleiner sind als die Wellenlänge der Laserstrahlung, die fokussiert werden soll.

Alternativ kann es sich bei dem diffraktiven optischen Element auch um ein Volumenhologramm handeln. Eine geeignete Oberflächenstruktur oder ein geeignetes Volumenhologramm des diffraktiven optischen Elements können für die gewünschten Abbildungseigenschaften mittels Simulationen berechnet werden.

Bei einer bevorzugten Ausgestaltung weist das diffraktive optische Element mehrere optische Achsen für die verschiedenen Wellenlängen der Halbleiterlaser auf. Diese Ausgestaltung macht sich zunutze, dass die Beugungseigenschaften des diffraktiven optischen Elements von der Wellenlänge des zu fokussierenden Lichts der Halbleiterlaser abhängig sind. Mittels einer geeigneten Oberflächenstruktur oder einem geeigneten Volumenhologramm kann erreicht werden, dass das diffraktive optische Element mehrere optische Achsen für die verschiedenen Emissionswellenlängen der Halbleiterlaser aufweist. Die mehreren optischen Achsen sind vorteilhaft versetzt zueinander angeordnet, und zwar vorzugsweise derart, dass die optische Achse für eine bestimmte Wellenlänge jeweils kollinear zu der Emissionsrichtung des Halbleiterlasers, der diese Wellenlänge emittiert, verläuft.

Bei einer alternativen Ausgestaltung verlaufen die optischen Achsen des als Linse fungierenden diffraktiven optischen Elements schräg zueinander. Auf diese Weise wird ein "Schielen" der Laserstrahlen erreicht, wodurch die Strahldeckung weiter verbessert werden kann.

In einer weiteren vorteilhaften Ausführungsform sind die mindestens zwei Halbleiterlaser parallel übereinander mit einander zugewandten Emissionsschichten angeordnet. Bei dieser Ausführungsform kann beispielsweise jeder der Halbleiterlaser ein Substrat aufweisen, wobei die Halbleiterlaser derart angeordnet sind, dass die Substrate voneinander abgewandt sind. Der Abstand der Emissionspunkte der mindestens zwei Halbleiterlaser ist in dieser Ausführungsform vorteilhaft klein, vorzugsweise 20 $\mu$m oder weniger, wodurch es insbesondere möglich ist, die Emissionspunkte der Halbleiterlaser sehr nahe an der optischen Achse der Linse anzuordnen.

In einer weiteren vorteilhaften Ausführungsform weist die optische Lichtquelle drei Halbleiterlaser auf, die zur Strahldeckung der emittierten Strahlen jeweils mit einander zugewandten Emissionsschichten in einem Dreieck angeordnet sind. Jeder der Halbleiterlaser weist zum Beispiel ein Substrat auf, wobei die Substrate voneinander abgewandt sind. Die Substrate bilden also ein Dreieck aus, wobei die auf den Substraten angeordneten Emissionsschichten zur Innenseite des Dreiecks zeigen. Auf diese Weise kann erreicht werden, dass die Abstände zwischen den Emissionspunkten der drei Halbleiterlaser vorteilhaft klein sind und vorzugsweise 100 $\mu$m oder weniger betragen. Insbesondere ist es auf diese Weise möglich, die Emissionspunkte der Halbleiterlaser sehr nahe an der optischen Achse der Linse anzuordnen. Vorteilhaft sind die Emissionspunkte gleich weit voneinander und bevorzugt auch gleich weit von der optischen Achse der Linse entfernt.

Bei einer bevorzugten Ausführungsform sind die mindestens zwei Halbleiterlaser nebeneinander auf einem gemeinsamen Substrat angeordnet. Bei einer weiteren bevorzugten Ausführungsform sind die mindestens zwei Halbleiterlaser auf einem Substrat monolithisch integriert, also in einem gemeinsamen Schichtstapel angeordnet.

In einer weiteren vorteilhaften Ausführungsform ist mindestens einer der mindestens zwei Halbleiterlaser in einer parallel zur optische Achse der Linse verlaufenden Richtung gegenüber mindestens einem der Halbleiterlaser versetzt angeordnet. In diesem Fall ist beispielsweise der Abstand des versetzt angeordneten Halbleiterlasers von der Linse kleiner als der Abstand des anderen Halbleiterlasers von der Linse. Auf diese Weise kann vorteilhaft der Effekt der Dispersion der Linse vermindert oder ganz kompensiert werden, aufgrund dessen die Linse verschiedene Brennweiten für die verschiedenfarbigen Laserstrahlen aufweist. Durch die versetzte Anordnung der verschiedenfarbigen Laser wird ermöglicht, dass die Brennpunkte der emittierten Strahlen in einer Ebene, insbesondere auf einem Schirm eines Laserdisplays, liegen.

In der optischen Lichtquelle kann mindestens einer der mindestens zwei Halbleiterlaser ein kantenemittierender Halbleiterlaser sein. Weiterhin kann es sich bei mindestens einem der mindestens zwei Halbleiterlaser auch um einen oberflächenemittierenden Halbleiterlaser mit Vertikalresonator (VCSEL) oder um einen um einen oberflächenemittierenden Halbleiterlaser mit externem Vertikalresonator (VECSEL) handeln.

Die optische Lichtquelle kann insbesondere gleichzeitig mindestens einen kantenemittierenden und mindestens einen oberflächenemittierenden Halbleiterlaser enthalten. Beispielsweise kann die optische Lichtquelle jeweils einen roten und einen blauen kantenemittierenden Halbleiterlaser und einen grünen oberflächenemittierenden Halbleiterlaser aufweisen. Insbesondere für die Farbe grün wird bevorzugt ein oberflächenemittierender Halbleiterlaser eingesetzt, da grüne kantenemittierende Halbleiterlaser schwerer zu realisieren sind als blaue oder rote kantenemittierende Halbleiterlaser.

Der von einem oberflächenemittierenden Halbleiterlaser, insbesondere VCSEL oder VECSEL, emittierte Strahl hat in der Regel ein anderes Strahlprofil als der Strahl eines kantenemittierenden Halbleiterlasers. Weist die optische Lichtquelle als Halbleiterlaser mindestens einen kantenemittierenden Halbleiterlaser und gleichzeitig mindestens einen oberflächenemittierenden Halbleiterlaser auf, wird zum Erreichen eines gleichartigen Strahlprofils der emittierten Strahlen in dem Strahlengang des frequenzverdoppelten Halbleiterlasers vorteilhaft eine Kugellinse angeordnet.

In einer weiteren vorteilhaften Ausführungsform ist mindestens einer der mindestens zwei Halbleiterlaser ein frequenzverdoppelter Halbleiterlaser. Insbesondere kann der frequenzverdoppelte Halbleiterlaser ein oberflächenemittierender Halbleiterlaser, zum Beispiel ein VCSEL oder ein VECSEL, oder ein DFB (Distributed Feed Back)-Laser sein.

In einer weiteren vorteilhaften Ausführungsform weist der Strahlenkombinator eine Ansteuerelektronik für die Halbleiterlaser auf, die geeignet ist, die Halbleiterlaser derart zeitlich versetzt anzusteuern, dass eine zumindest teilweise Strahldeckung erreicht wird.

Bei einem mehrfarbigen Laserdisplay, das einen Strahlenkombinator gemäß der Erfindung enthält, werden die von den Halbleiterlasern emittierten Strahlen beispielsweise über einen Scanner-Spiegel auf einen Schirm projiziert, um dort ein Bild anzuzeigen. Die Strahlen werden mit dem Strahlenkombinator vorteilhaft derart zur Deckung gebracht, dass die Strahlen beim Auftreffen auf den Schirm ganz oder zumindest teilweise überlappen. Der Abstand des Schirms zum Scanner-Spiegel kann dabei variabel sein.

Die Erfindung wird im Folgenden anhand von Ausführungsformen im Zusammenhang mit den Figuren 1 bis 18 näher erläutert. Es zeigen:

Figur 1      eine schematische Darstellung einer Ausführungsform eines mehrfarbigen Laserdisplays mit einer Ausführungsform eines Strahlenkombinators,

Figur 2      Beispiele von Strahlbildern auf einem Schirm für verschiedene Ausführungsformen des Strahlenkombinators,

Figur 3      eine schematische Darstellung einer Ausführungsform des Strahlenkombinators mit drei Halbleiterlasern,

Figur 4      eine schematische Darstellung einer Ausführungsform des Strahlenkombinators mit zwei Halbleiterlasern,

Figur 5      eine schematische Darstellung einer Ausführungsform des Strahlenkombinators mit drei Halbleiterlasern, die in einem Dreieck angeordnet sind,

Figur 6      eine schematische Darstellung einer Ausführungsform des Strahlenkombinators mit übereinander angeordneten Halbleiterlasern,

Figur 7    eine schematische Darstellung einer Ausführungsform des Strahlenkombinators mit einem monolithisch integrierten Halbleiterlaser,

Figur 8    eine schematische Darstellung einer Ausführungsform des Strahlenkombinators mit einem versetzt angeordneten Halbleiterlaser,

Figur 9    eine schematische Darstellung einer Ausführungsform des Strahlenkombinators mit zwei kantenemittierenden Laserdioden und einem frequenzverdoppelten Halbleiterlaser,

Figur 10    eine schematische Darstellung einer Ausführungsform des Strahlenkombinators mit einer über den zwei kantenemittierenden Laserdioden angeordneten Kugellinse,

Figur 11    eine schematische Darstellung einer Ausführungsform des Strahlenkombinators mit einem Prisma,

Figur 12    eine schematische Darstellung einer Ausführungsform des Strahlenkombinators mit einer Kollimatorlinse,

Figur 13    eine schematische Darstellung einer Ausführungsform des Strahlenkombinators mit einem beugenden Element,

Figur 14    eine schematische Darstellung einer Ausführungsform des Strahlenkombinators mit einer Linse mit Freiformfläche, und

Figur 15    eine schematische Darstellung einer Ausführungsform des Strahlenkombinators mit übereinander angeordneten kantenemittierenden Laserdioden und einer Kugellinse,

Figur 16    eine schematische Darstellung einer Ausführungsform des Strahlenkombinators mit einem als Linse fungierenden diffraktiven optischen Element,

Figur 17    eine schematische Darstellung einer weiteren Ausführungsform des Strahlenkombinators mit einem als Linse fungierenden diffraktiven optischen Element, und

Figur 18    eine schematische Darstellung einer weiteren Ausführungsform des Strahlenkombinators mit einem als Linse fungierenden diffraktiven optischen Element.

Gleiche oder gleich wirkende Elemente sind in den Figuren mit den gleichen Bezugszeichen versehen. Die Figuren sind nicht als maßstabsgerecht anzusehen, vielmehr können einzelne Elemente zur Verdeutlichung übertrieben groß dargestellt sein.

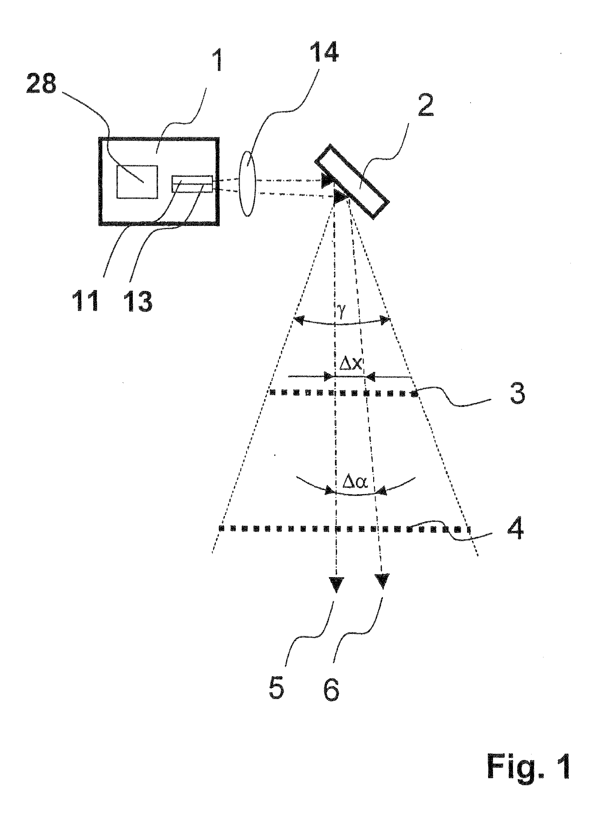

Figur 1 zeigt eine schematische Darstellung eines mehrfarbigen Laserdisplays mit einem Strahlenkombinator. Der Strahlenkombinator umfasst eine optische Lichtquelle 1, die zwei Halbleiter-Laser 11, 13 enthält, und eine Linse 14, die im Strahlengang der von den Halbleiterlasern 11, 13 emittierten Lichtstahlen 5, 6 angeordnet ist. Das Laserdisplay enthält weiterhin einen Scanner-Spiegel 2 zur Umlenkung der von den Halbleiterlasern 11, 13 emittierten Laserstrahlen 5, 6 auf einen Schirm 3. Der dargestellte weitere Schirm 4, der vom Scanner-Spiegel 2 weiter entfernt ist, soll andeuten, dass die Entfernung des Schirms 3 vom Scanner-Spiegel 2 nicht festgelegt ist, sondern der Schirm 3, 4 vielmehr in verschiedenen Abständen zum Scanner-Spiegel 2 angeordnet werden kann.

Die optische Lichtquelle 1 weist in dieser Ausführungsform zwei Halbleiterlaser 11, 13 auf. Ein Halbleiterlaser 11 emittiert zum Beispiel rotes Licht mit einer Wellenlänge von beispielsweise 660 nm. Der andere Halbleiterlaser 13 emittiert beispielsweise blaues Licht mit einer Wellenlänge von zum Beispiel 440 nm.

Der rote Laserstrahl 5 und der blaue Laserstrahl 6 werden von den Halbleiterlasern 11, 13 der optischen Lichtquelle 1 des Strahlenkombinators emittiert und treffen auf den Scanner-Spiegel 2. Der Scanner-Spiegel 2 projiziert den roten Strahl 5 und den blauen Strahl 6 auf den Schirm 3, 4. Beim Auftreffen auf den Schirm 3, 4 weisen die Strahlen 5, 6 einen Strahlversatz $\Delta x$ auf dem Schirm 3, 4 auf. Der rote Strahl 5 und der blaue Strahl 6 weisen beim Auftreffen auf den Schirm 3, 4 zueinander eine Strahldivergenz $\Delta\alpha$ auf.

Von dem Scanner-Spiegel 2 werden die Strahlen 5, 6 mit einem Scanwinkel $\gamma$ auf den Schirm 3, 4 projiziert, sodass ein mehrfarbiges Bild mit einem sogenannten Flying-Spot Verfahren auf den Schirm 3, 4 geschrieben wird. Die Ablenkung der Strahlen 5, 6 auf den Schirm 3, 4 erfolgt sowohl in horizontaler Richtung (x-Richtung) als auch in einer senkrecht zur Zeichenebene verlaufenden vertikalen Richtung (y-Richtung, nicht dargestellt).

Die Strahlen 5, 6 weisen vorteilhaft eine zumindest teilweise Strahldeckung auf, sodass sie auf dem Schirm 3, 4 zumindest teilweise überlappen. Der Strahlversatz $\Delta x$ sollte vorzugsweise +/- 0,1 mm oder weniger betragen. Die

Strahldivergenz $\Delta\alpha$, unter der die Strahlen auf den Schirm treffen, sollte bevorzugt weniger als +/- 0,02° betragen. Je geringer die Strahldivergenz $\Delta\alpha$ und je geringer der Abstand der Emissionspunkte der Halbleiterlaser ist, desto weiter kann der Schirm 3, 4 von dem Scannerspiegel 2 entfernt angeordnet werden, ohne dass der Strahlversatz $\Delta x$ derart groß wird, dass keine Strahldeckung mehr vorliegt. Durch die in dem Strahlenkombinator enthaltene Linse 14 wird die Strahldivergenz $\Delta\alpha$ der Lichtstrahlen 5, 6 vorteilhaft bereits vor dem Auftreffen auf den Scanner-Spiegel 2 verringert.

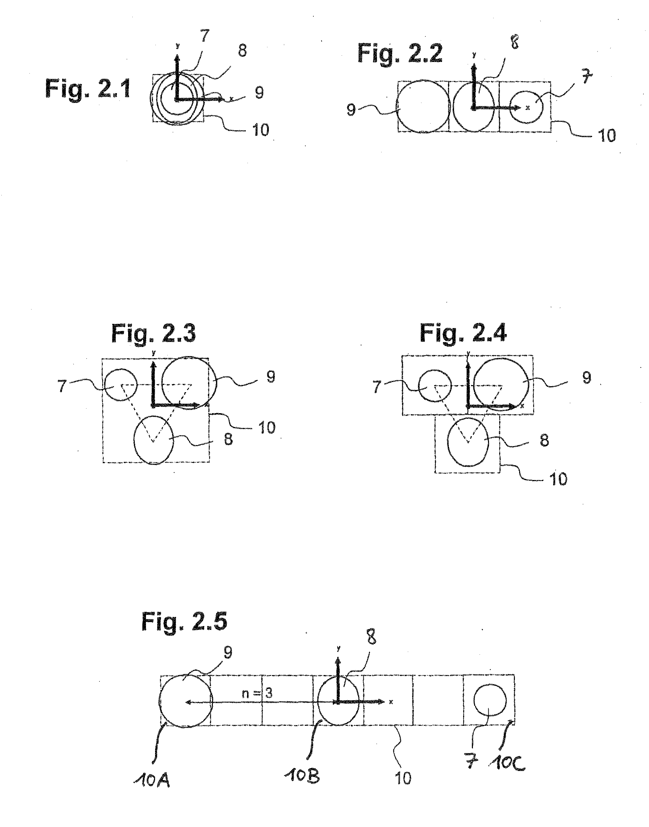

Der Strahlenkombinator enthält vorteilhaft eine Ansteuerelektronik 28 für die Halbleiterlaser 11, 13, die beispielsweise in die optische Lichtquelle 1 integriert ist. Die Funktion der Ansteuerelektronik 28 wird im Folgenden anhand der Figur 2 näher erläutert.

In Figur 2 sind schematisch mehrere Beispiele von möglichen Strahlbildern auf einem Schirm dargestellt, die mit dem Strahlenkombinator erzielt werden können. Die nicht dargestellte optische Lichtquelle weist bei dieser Ausführungsform drei Halbleiterlaser auf, die Strahlen in den Farben rot, grün und blau emittieren. Die Figuren 2.1 bis 2.5 zeigen beispielhaft die Positionen der Strahlquerschnitte auf dem Schirm eines Laserdisplays, das eine Vielzahl von Pixeln 10 aufweist.

In der Figur 2.1 werden ein Strahlquerschnitt 7 des blauen Lasers, ein Strahlquerschnitt 8 des grünen Lasers und ein Strahlquerschnitt 9 des roten Lasers gezeigt. Der hier gezeigte Fall stellt den Idealfall dar, bei dem die Strahlquerschnitte 7, 8 ,9 der von den Halbleiterlasern emittierten Strahlen ohne Strahlabweichung auf ein einzelnes Pixel 10 des Schirms auftreffen.

Weisen die emittierten Strahlen beim Auftreffen auf den Schirm des Laserdisplays eine Strahldivergenz $\Delta\alpha$ zueinander auf, ist ein Erreichen dieser idealen Strahldeckung erschwert.

Figur 2.2 zeigt ein Beispiel, bei dem der blaue Strahlquerschnitt 7, der rote Strahlquerschnitt 9 und der grüne Strahlquerschnitt 8 jeweils auf benachbarte Pixel 10 einer Zeile auftreffen. Der grüne Strahl 8 trifft also in x-Richtung um ein Pixel gegenüber dem roten Strahl 9 versetzt auf dem Schirm auf. Der blaue Strahl 7 trifft gegenüber dem roten Strahl in x-Richtung um 2 Pixel versetzt auf den Schirm auf.

Ein derartiger Strahlversatz kann ohne weitere optische Elemente mittels einer Ansteuerelektronik für die Halbleiterlaser ausgeglichen werden. Dazu steuert die Ansteuerelektronik die Halbleiterlaser derart zeitlich versetzt an, dass beispielsweise in einer bestimmten Position des Scanner-Spiegels der rote Laser mit der Farbinformation eines bestimmten Bildpunkts, der grüne Laser mit der Farbinformation des um ein Pixel versetzten Bildpunkts und der blaue Laser mit der Farbinformation des um zwei Pixel versetzen Bildpunkts betrieben wird. Auf diese Weise sorgt die Ansteuerelektronik dafür, dass die Farbinformationen für rot, grün und blau eines Bildpunkts in das gleiche Pixel auf dem Schirm abgebildet werden. Es wird also mittels der Ansteuerelektronik beim Schreiben des Bildes der Zustand wie in Figur 2.1 erzeugt. Allerdings gehen an den Rändern des Schirms bei dieser Ausführungsform jeweils zwei Pixel 10 verloren, da sie nicht von allen drei Farben getroffen werden und somit für die Bilderzeugung nicht nutzbar sind.

Figur 2.3 zeigt einen Fall, bei dem die Strahlen derart auf den Schirm projiziert werden, dass sie sowohl in x-Richtung als auch in y-Richtung etwas versetzt zueinander auf den Schirm auftreffen. Der Durchmesser der Strahlquerschnitte 7, 8, 9 beträgt beispielsweise zwischen 250 $\mu m$ und 450 $\mu m$ und die Abstände der Strahlmittelpunkte betragen beispielsweise 300 bis 800 $\mu m$. In Figur 2.3 liegen die Positionen der drei Strahlquerschnitte 7, 8, 9 vergleichsweise nahe beieinander auf dem Schirm, so dass sie gemeinsam ein Pixel 10 des Displays ausbilden können. Das Pixel 10 enthält also alle drei Farben. Allerdings ist die Pixelgröße des Pixels 10 gegenüber der in Figur 2.1 dargestellten idealen Strahldeckung trotz gleicher Strahldurchmesser der Laserstrahlen vergrößert, wodurch die Bildqualität verringert wird.

Figur 2.4 zeigt eine verbesserte Lösung für den in Figur 2.3 dargestellten Fall, bei dem eine Verminderung der Auflösung aufgrund eines Strahlversatzes der Laserstrahlen durch eine geeignete Ansteuerelektronik vermieden wird. Die drei versetzt auf den Schirm auftreffenden Strahlen mit dem jeweiligen Strahlquerschnitt 7, 8, 9 erzeugen jeweils verschiedene Pixel 10 des Bildes. Mit der Ansteuerelektronik wird durch eine geeignete zeitlich versetzte Ansteuerung der Halbleiterlaser ähnlich wie bei dem in Figur 2.2 dargestellten Beispiel erreicht, dass die Farbinformationen für rot, grün und blau eines jeden Bildpunkts in das gleiche Pixel 10 auf dem Schirm abgebildet werden.

Für den Fall, dass die Laserstahlen mit einem derart großen Strahlversatz auf den Schirm auftreffen, dass sie nicht zur Erzeugung benachbarter Pixel 10 verwendet werden können, ist es möglich, dass der Abstand zwischen den Strahlen auch mehrere Pixel 10 des Bildes beträgt. Figur 2.5 zeigt einen solchen Fall. Auf ein erstes Pixel 10A trifft der rote Strahl mit dem Strahlquerschnitt 9 auf und ein grüner Strahl mit dem Strahlquerschnitt 8 trifft auf ein weiteres Pixel 10B, das von dem ersten Pixel 10A einen Pixelabstand n aufweist. Der Pixelabstand n entspricht dem Strahlversatz $\Delta x$ auf dem Schirm. In dieser Ausführungsform ist der Pixelabstand n = 3 Pixel. Weiterhin trifft ein blauer Strahl mit dem Strahlquerschnitt 7 mit einem weiteren Pixelabstand von n = 3 Pixeln auf das in Figur 2.5 gezeigte äußerste rechte Pixel 10C.

Die Strahldeckung erfolgt auch in dieser Ausführungsform wie zuvor im Zusammenhang mit den Figuren 2.2 und 2.4 beschrieben mittels der Ansteuerelektronik, wodurch aber an jeder Seite des Schirms umso mehr Pixel nicht zur Bilderzeugung nutzbar sind, je größer der Pixelabstand n der versetzten Strahlen ist. Dieser Pixelabstand n kann jedoch dadurch reduziert werden, dass die Strahldivergenz $\Delta\alpha$ durch die Linse 14 des Strahlenkombinators minimiert wird, sodass der Strahlversatz $\Delta x$ der Strahlen auf dem Schirm beziehungsweise der Pixelabstand n nur wenige Pixel beträgt.

Es ist weiterhin vorteilhaft, wenn ein Strahlversatz wie bei den Beispielen in Fig. 2.2 und Fig. 2.5 nur innerhalb einer Zeile von Pixeln 10 vorliegt, also in Richtung der x-Achse, da das Bild in dieser Richtung geschrieben wird. In diesem Fall ist der Aufwand für die Ansteuerelektronik geringer, als wenn gleichzeitig auch ein Strahlversatz in den Spalten von Pixeln 10, also in Richtung der y-Achse, mit der Ansteuerelektronik korrigiert werden muss, wie es bei dem in Fig. 2.4 gezeigten Beispiel der Fall ist.

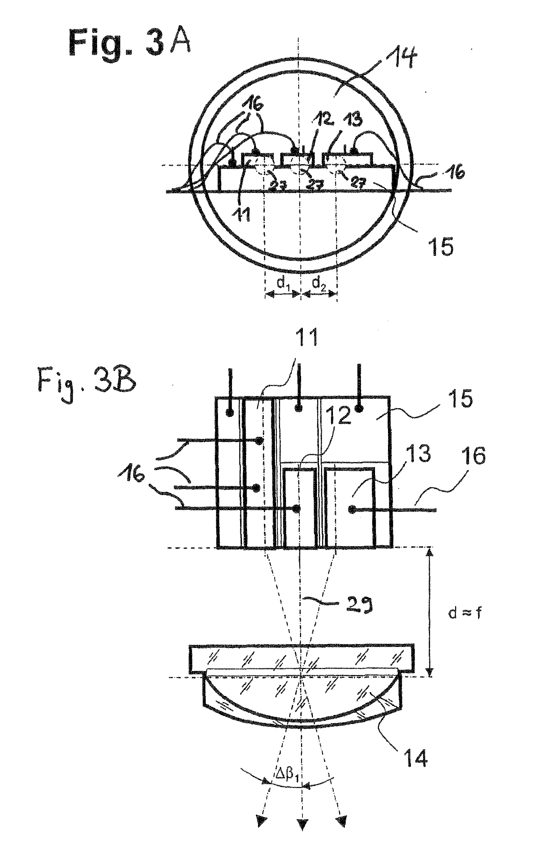

Figur 3 zeigt eine Ausführungsform des Strahlenkombinators mit einer Linse 14 und einem roten Halbleiterlaser 11, einem grünen Halbleiterlaser 12 und einem blauen Halbleiterlaser 13, die auf einer Wärmesenke 15 angeordnet sind. Figur 3A zeigt eine Durchsicht durch die Linse 14 auf die Halbleiterlaser 11, 12, 13 der optischen Lichtquelle und Figur 3B zeigt eine Draufsicht auf den Strahlenkombinator.

Figur 3A zeigt die drei Halbleiterlaser 11, 12, 13, die nebeneinander auf der Wärmesenke 15 angeordnet sind. Die drei Halbleiterlaser 11, 12, 13 sind in dieser Ausführungsform kantenemittierende Laserdioden und sind nebeneinander auf die Wärmesenke 15 gelötet. Die Halbleiterlaser 11, 12, 13 sind derart auf der Wärmesenke 15 angeordnet, dass ihre p-seitige Kontaktierung der Wärmesenke zugewandt ist. Die Linse 14 ist beispielsweise aus Glas oder Kunststoff hergestellt.

Die Halbleiterlaser 11, 12, 13 weisen jeweils einen Drahtkontakt 16 auf und sind einzeln elektrisch ansteuerbar. Jeder der drei Halbleiterlaser 11, 12, 13 weist einen Emissionspunkt 27 auf. Der grüne Halbleiterlaser 12 ist auf einer optischen Achse der Linse 14 angeordnet. Der Abstand d1 zwischen dem Emissionspunkt 27 des roten Halbleiterlasers 11 und der optischen Achse der Linse 14, sowie der Abstand d2 zwischen dem Emissionspunkt 27 des blauen Halbleiterlasers 13 und der optischen Achse 29 der Linse 14 sollte möglichst gering sein, um eine gute Strahldeckung der Strahlen, die von den Halbleiterlasern 11, 12, 13 emittiert werden, zu erzielen.

Die Abstände der Emissionspunkte 27 der Halbleiterlaser 11, 12, 13 von der optischen Achse 29 der Linse 14 betragen vorzugsweise weniger als 500 μm, besonders bevorzugt weniger als 100 μm. Das heißt, dass die Halbleiterlaser 11, 12, 13 auf der Wärmesenke 15 sehr kleine Abstände zueinander aufweisen.

Figur 3B zeigt den Strahlenkombinator aus Figur 3A in einer Draufsicht. Die Linse 14 ist in einem Abstand d, der vorzugsweise gleich der Brennweite f der Linse 14 ist, von den Emissionspunkten 27 der Halbleiterlaser 11, 12, 13 angeordnet. Der Abstand der Linse d von den Emissionspunkten 27 der Halbleiterlaser 11, 12, 13 beträgt bevorzugt 5 mm oder weniger, besonders bevorzugt 3 mm oder weniger, zum Beispiel 2 mm. Die emittierten Strahlen laufen durch die Linse 14. In Fig. 3B sind diejenigen Strahlen der Halbleiterlaser angedeutet, die durch den Mittelpunkt der Linse 14 verlaufen. Beispielsweise tritt ein Strahl des blauen Halbleiterlasers 13, der in Richtung des Linsenmittelpunkts emittiert wird, mit einem Strahlfehlwinkel $\Delta\beta1 = \arctan(d1 / f)$ in Bezug auf die optische Achse 29 durch die Linse 14 hindurch. Der Strahlfehlwinkel $\Delta\beta1$ ist umso kleiner, je kleiner der Abstand d1 des Emissionspunktes 27 des Halbleiterlasers 11 von der optischen Achse der Linse 14 und je größer die Brennweite f der Linse 14 ist.

Der Strahlfehlwinkel $\Delta\beta1$ kann dazu führen, dass der Strahl des blauen Halbleierlasers 13 um n Pixel versetzt gegenüber dem Strahl des grünen Halbleiterlasers 12, dessen Emissionspunkt auf der optischen Achse 29 der Linse angeordnet ist, auf einen Schirm auftrifft. Bei einem Scanwinkel $\gamma$ des Displays und einer Anzahl N Pixeln pro Zeile gilt für den Pixelabstand n, unter dem die Strahlen versetzt auf den Schirm auftreffen:

$$n = N\ (\Delta\beta1/\gamma) = N\ [\arctan\ (d1/f)/\ \gamma].$$

In einem Rechenbeispiel ist der Abstand d1 des Emissionspunktes 27 des roten Halbleiterlasers von der optischen Achse der Linse beispielsweise 100 μm. Die Brennweite f der Linse ist 2 mm. Der Scanwinkel $\gamma$ ist 44° und eine Pixelanzahl N in einer Zeile auf dem Schirm ist 640. Der Pixelabstand n in einer Zeile, also in x-Richtung auf dem Schirm, beträgt dann 42 Pixel.

Da sich die emittierten Strahlen der Halbleiterlaser 11, 12, 13 in ihrer Wellenlänge unterscheiden, kann es sein, dass die Brennpunkte der Strahlen aufgrund der Dispersion nicht in einer Ebene liegen. Durch die Verwendung einer achromatischen Linse 14 oder einer Linse aus einem Spezialglas mit geringer Dispersion kann der Einfluss der Dispersion vermindert oder ganz aufgehoben werden.

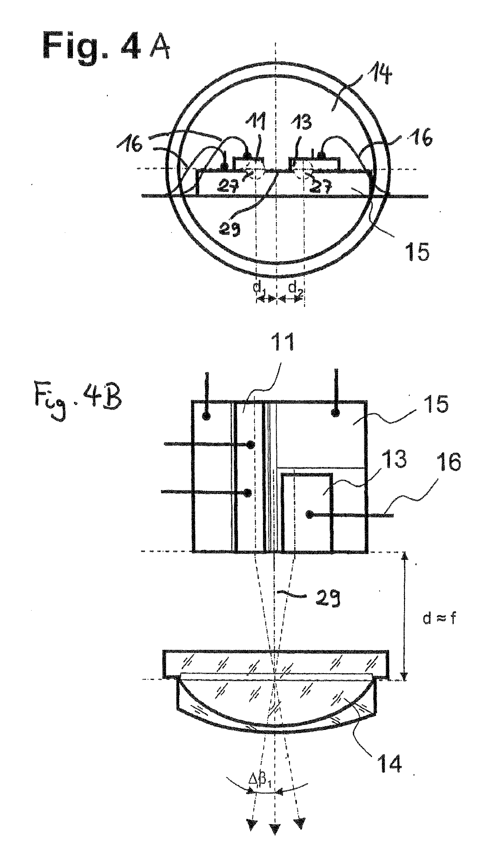

Figur 4 zeigt eine weitere Ausführungsform des Strahlenkombinators mit zwei Halbleiterlasern 11, 13. Figur 4A zeigt eine Durchsicht durch die Linse 14 auf die Halbleiterlaser 11, 13 der optischen Lichtquelle. Figur 4B zeigt eine Draufsicht auf den Strahlenkombinator.

Figur 4A zeigt die Linse 14, den roten Halbleiterlaser 11 und den blauen Halbleiterlaser 13, die auf der Wärmesenke 15 nebeneinander angeordnet sind. Wie in der Ausführungsform in Figur 3 sind die Halbleiterlaser 11, 13 kantenemittierende Laserdioden und werden über Drahtkontakte 16 einzeln elektrisch angesteuert. Die Halbleiterlaser 11, 13 sind bevorzugt derart auf der Wärmesenke 15 angeordnet, dass ihre p-seitige Kontaktierung der Wärmesenke zugewandt ist.

Der Abstand d1 des Emissionspunktes 27 des roten Halbleiterlasers 11 zur optischen Achse 29 der Linse 14 und der Abstand d2 des Emissionspunktes 27 des blauen Halbleiterlasers 13 zur optischen Achse 29 der Linse 14 sollte jeweils möglichst klein sein, so dass die Strahlen unter einem geringen Strahlfehlwinkel gegenüber der optischen Achse 29 auf die Linse 14 auftreffen.

Wie in Fig. 4B dargestellt, weist beispielsweise ein in Richtung des Linsenmittelpunkts emittierter Strahl des blauen Halbleiterlasers 13 nach dem Durchgang durch die Linse einen Strahlfehlwinkel $\Delta\beta1$ auf. Der Strahlfehlwinkel $\Delta\beta1$ ist kleiner als bei der Ausführungsform in Figur 3, da der Abstand d1 des Emissionspunkts 27 des Halbleiterlasers 11 zur optischen Achse der Linse 14 kleiner ist. Der Strahlversatz auf dem Schirm kann auf diese Weise reduziert werden und somit eine verbesserte Bildqualität erreicht werden.

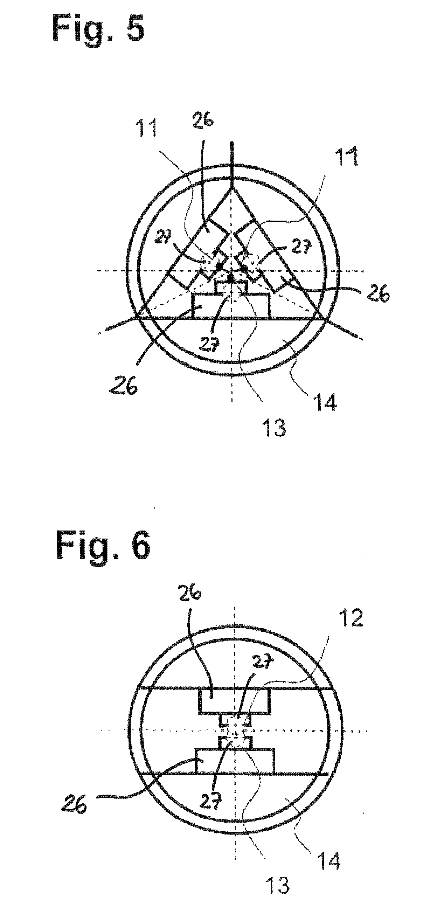

Figur 5 zeigt eine weitere Ausführungsform des Strahlenkombinators 1 mit drei Halbleiterlasern 11, 12, 13, die in einem Dreieck angeordnet sind. Es ist eine Durchsicht durch die Linse 14 auf eine Anordnung mit drei Halbleiterlasern 11, 12, 13 gezeigt, wobei die Halbleiterlaser 11, 12, 13 jeweils auf einem Substrat 26 angeordnet sind.

Die jeweiligen Emissionsschichten der Halbleiterlaser 11, 12, 13 sind einander zugewandt. Die Halbleiterlaser 11, 12, 13 sind vorteilhaft derart angeordnet, dass sich die p-Kontaktseiten auf der von dem Substrat 26 abgewandten Seite der Halbleiterlaser 11, 12 ,13 einander gegenüberliegen. Auf diese Weise können kleinere Abstände der Emissionspunkte 27 von der optischen Achse der Linse 14 erzielt werden als bei einer Anordnung, bei der sich die Substrate der Halbleiterlaser gegenüber liegen würden.

Die Emissionspunkte 27 der Halbleiterlaser 11, 12, 13 sind als Kreise eingezeichnet und bei dieser Ausführungsform sehr nahe an der optischen Achse der Linse 14 angeordnet. Die optische Achse der Linse 14 verläuft durch den Mittelpunkt der Linse, der sich im Schnittpunkt der gestrichelten Linien befindet. Der Abstand zwischen den Emissionspunkten beträgt vorzugsweise 100 $\mu$m oder weniger, besonders bevorzugt 50 $\mu$m oder weniger, so dass eine gute Strahldeckung und somit ein geringer Strahlversatz $\Delta$x auf einem Schirm erzielt werden kann. Die jeweiligen Emissionspunkte 27 sind vorzugsweise gleich weit von der optischen Achse der Linse 14 entfernt.

Figur 6 zeigt eine weitere Ausführungsform des Strahlenkombinators, bei der die Halbleiterlaser übereinander angeordnet sind. Es ist eine Durchsicht durch die Linse 14 auf zwei Halbleiterlaser 11, 13 gezeigt, die parallel übereinander angeordnet sind. Die Halbleiterlaser 11, 13 befinden sich jeweils auf einem Substrat 26, wobei die Substrate 26 voneinander abgewandt sind. In dieser Ausführungsform sind die Emissionsschichten der jeweiligen Halbleiterlaser 11, 13 einander zugewandt. Beispielsweise ist der Halbleiterlaser 11 auf dem Kopf stehend oberhalb des Halbleiterlasers 13 angeordnet. Durch eine solche Anordnung ist der Abstand der Emissionspunkte 27 der jeweiligen Halbleiterlaser 11, 13 zu der optischen Achse der Linse, die sich im durch den Schnittpunkt der gestrichelten Linien befindet, sehr klein. Vorteilhaft beträgt der Abstand der Emissionspunkte 27 der Halbleiterlaser 11, 13 nur 20 $\mu$m oder weniger, besonders bevorzugt nur 10 $\mu$m oder weniger. Dadurch wird eine gute Strahldeckung der Strahlen erreicht.

Die Halbleiterlaser 11, 13 sind bei dieser Ausführungsform vorzugsweise derart auf dem jeweiligen Substrat 26 angeordnet, dass die p-seitigen Kontakte der Halbleiterlaser 11, 13 jeweils auf der dem Substrat 26 gegenüberliegenden Oberfläche angeordnet sind.

Die sich gegenüberliegenden Halbleiterlaser sind dabei entweder, wie in Fig. 6 dargestellt, durch einen dünnen Luftspalt voneinander beabstandet oder an ihrer p-Kontaktseite miteinander verbunden. Beispielsweise können die Halbleiterlaser an ihren p-Kontaktseiten aufeinander gelötet sein, so dass sie durch eine vorzugsweise nur 1 $\mu$m bis 8 $\mu$m dicke Lotschicht voneinander beabstandet sind. Das Aufeinanderlöten der Halbleiterlaser 11, 13 hat ferner den Vorteil, dass sie auf diese Weise thermisch verbunden werden. Beispielsweise kann der blaue Halbleiterlaser 13 ein Substrat 26 aus GaN aufweisen, das sich durch eine gute Wärmeleitfähigkeit auszeichnet. Bei einer thermischen Verbindung der Halbleiterlaser 11, 13 kann vorteilhaft auch die Wärme des anderen Halbleiterlasers 11, der beispielsweise ein roter Halbleiterlaser ist, zumindest teilweise über das Substrat des blauen Halbleiterlasers 13 abgeführt werden.

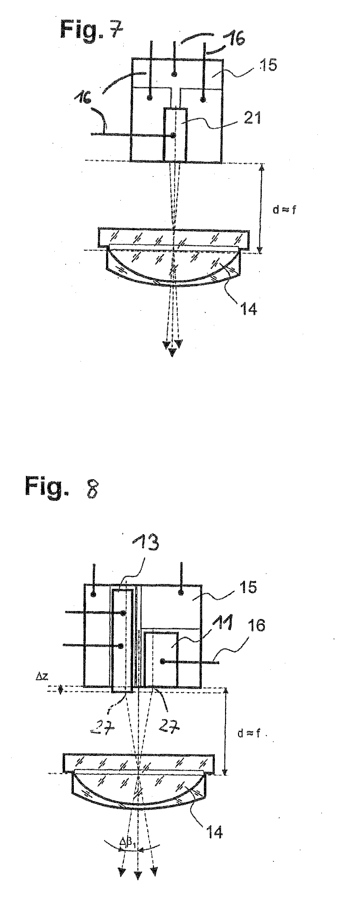

Figur 7 zeigt eine weitere Ausführungsform des Strahlenkombinators in einer Draufsicht, bei dem die Lichtquelle einen monolithisch integrierten mehrfarbigen Halbleiterlaser 21 aufweist. Der monolithisch integrierte Halbleiterlaser 21 enthält mehrere Emissionsschichten, die auf einem gemeinsamen Substrat angeordnet sind. Insbesondere können die mehreren Emissionsschichten übereinander in einem epitaktisch hergestellten Schichtsystem des Halbleiterlasers 21 angeordnet sein. Bevorzugt enthält der monolithisch integrierte Halbleiterlaser 21 drei Emissionsschichten für die Farben rot, grün und blau. Die mehreren Emissionsschichten sind über die Kontakte 16 einzeln ansteuerbar.

Die Emissionspunkte der mehreren Emissionsschichten des monolithisch integrierten Halbleiterlasers 21 sind vorteilhaft nur wenige $\mu$m voneinander beabstandet. Daher ist es möglich, dass alle Emissionspunkte nahezu auf der optischen Achse der Linse 14 angeordnet sind. Auch nach dem Durchgang durch die Linse 14 weisen die emittierten Strahlen daher einen sehr kleinen Strahlfehlwinkel auf. Weiterhin hat der monolithisch integrierte Halbleiterlaser 21 den Vorteil, dass im Gegensatz zu separat gefertigten Halbleiterlasern Positionierungsfehler bei der Montage vermieden werden.

Zur Abfuhr der beim Betrieb erzeugten Wärme ist der monolithisch integrierte Halbleiterlaser 21 bevorzugt auf einer Wärmesenke 15 angeordnet.

Figur 8 zeigt eine weitere Ausführungsform des Strahlenkombinators mit zwei Halbleiterlasern 11, 13, die in ihrer Emissionsrichtung versetzt zueinander angeordnet sind.

Die optische Lichtquelle weist zum Beispiel einen roten Halbleiterlaser 11 und einen blauen Halbleiterlaser 13 auf. Die Halbleiterlaser 11, 13 sind in dieser Ausführungsform kantenemittierende Laserdioden. Der Emissionspunkt 27 des blauen Halbleiterlasers 13 ist gegenüber dem Emissionspunkt 27 des roten Halbleiterlasers 11 um einen Abstand $\Delta z$ entlang der optischen Achse der Linse 14 versetzt.

Durch die versetzte Anordnung der Halbleiterlaser 11, 13 mit dem Abstand $\Delta z$ wird der Farbfehler der Linse (chromatische Aberration) aufgrund der der Dispersion des Linsenmaterials kompensiert, durch den die Brennpunkte für Licht unterschiedlicher Wellenlängen, beispielsweise für rotes Licht und blaues Licht, nicht zusammenfallen. Wenn zum Beispiel die Brennweite der Linse aufgrund der Dispersion für blaues Licht kürzer ist als für rotes Licht, wird der blaue Laser 13 näher an der Linse 14 angeordnet als der rote Laser 11.

Die Kompensierung des Farbfehlers der Linse 14 mittels der versetzten Anordnung der Halbleiterlaser 11, 13 hat den Vorteil, dass die emittierten Strahlen nach dem Durchgang durch die Linse 14 einen geringeren Strahlfehlwinkel $\Delta\beta 1$ gegenüber der optischen Achse aufweisen als bei einer nicht versetzten Anordnung der Halbleiterlaser.

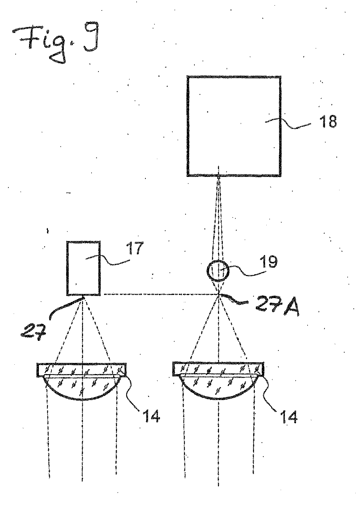

Figur 9 zeigt eine weitere Ausführungsform des Strahlenkombinators. Die optische Lichtquelle enthält eine kantenemittierende Laserdiode 17, die rotes Licht und blaues Licht emittiert. Die kantenemittierende Laserdiode 17 kann insbesondere zwei monolithisch integrierte Emissionsschichten für rotes Licht und blaues Licht aufweisen.

Weiterhin enthält die optische Lichtquelle einen frequenzverdoppelten Halbleiterlaser 18, der grünes Licht emittiert. Der frequenzverdoppelte Halbleiterlaser 18 kann insbesondere ein Vertical External Cavity Surface Emitting Laser (VECSEL), der optisch oder elektrisch gepumpt sein kann, oder ein Distributed Feed Back Laser sein. Die Frequenzverdopplung des Halbleiterlasers 18 erfolgt zum Beispiel mit einem nichtlinearen optischen Kristall.

Beispielsweise kann der Halbleiterlaser 18 eine Grundwellenlänge von 1064 $\mu$m aufweisen, wobei mittels Frequenzverdopplung grünes Licht mit einer Wellenlänge von 532 nm erzeugt wird.

Das Strahlprofil des grünen frequenzverdoppelten Halbleiterlasers 18 unterscheidet sich vom Strahlprofil des kantenemittierenden Halbleiterlasers 17. Dies beruht darauf, dass frequenzverdoppelte oberflächenemittierende Laser typischerweise ein geringere Strahldivergenz und einen größeren Strahldurchmesser aufweisen als kantenemittierende Halbleiterlaser.

Die unterschiedlichen Strahlprofile der Halbleiterlaser 17, 18 erschweren die Erzielung einer Strahldeckung mittels eines Strahlenkombinators. Es ist daher vorteilhaft, die Strahlprofile der Halbleiterlaser 17, 18 vor dem Durchtritt durch die Linse 14 des Strahlenkombinators aneinander anzupassen. Zur Anpassung des Strahlprofils des grünen Halbleiterlasers 18 an das Strahlprofil des kantenemittierenden Halbleiterlasers 17 wird vorzugsweise eine Kugellinse 19 in dem Strahlengang des grünen Halbleiterlasers 18 angeordnet. Die Kugellinse 19 hat in dieser Ausführungsform einen kleinen Durchmesser, insbesondere 300 $\mu$m oder weniger. Durch die Verwendung dieser extrem kurzbrennweitigen Kugellinse 19 kann das Strahlprofil des grünen Strahls an das des roten und blauen Strahls des kantenemittierenden Halbleiterlasers 17 angepasst werden.

Der Fokus 27A der Kugellinse 19 stellt einen Quasi-Emissionspunkt dar, von dem ein Strahl ausgeht, der ein ähnliches Strahlprofil aufweist wie der von einem Emissionspunkt 27 ausgehende Strahl des kantenemittierenden Halbleiterlasers 17.

Die roten, grünen und blauen Strahlen treffen daher mit einem zumindest näherungsweise gleichen Strahlprofil auf die Linsen 14 des Strahlenkombinators. Anstelle der in Fig. 9 dargestellten zwei Linsen 14 für die Strahlen kann insbesondere auch eine gemeinsame Linse für die roten, blauen und grünen Strahlen der Halbleiterlaser 17, 18 verwendet werden, wodurch der optische Aufbau des Strahlenkombinators vorteilhaft vereinfacht wird.

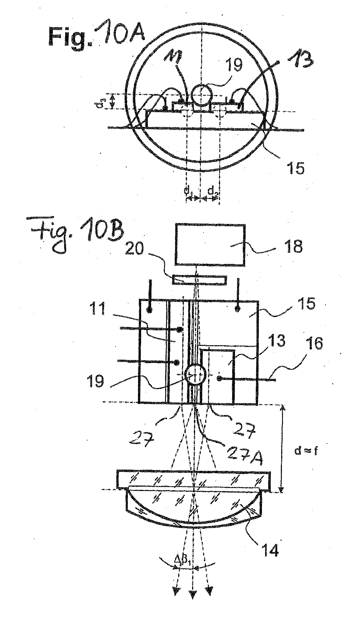

Figur 10 zeigt eine weitere Ausführungsform des Strahlenkombinators 1 mit einer optischen Lichtquelle aus drei Halbleiterlasern 11, 13, 18. Figur 10A zeigt eine Durchsicht durch die Linse 14 auf die optische Lichtquelle und Figur 10B zeigt eine Draufsicht auf den Strahlenkombinator.

Die optische Lichtquelle enthält einen roten Halbleiterlaser 11 und einen blauen Halbleiterlaser 13, die beide kantenemittierende Halbleiterlaser sind. Ferner enthält die optische Lichtquelle einen den frequenzverdoppelten Halbleiterlaser 18 zum Emittieren des grünen Strahls. Wie bei der im Zusammenhang mit Fig. 9 beschriebenen Ausführungsform kann es sich bei dem frequenzverdoppelten Halbleiterlaser 18 insbesondere um einen VECSEL handeln.

Zur Anpassung des Strahlprofils des grünen Halbleiterlasers 18 an die Strahlprofile des roten Halbleiterlasers 11 und des blauen Halbleiterlasers 13 ist wie bei dem zuvor dargestellten Ausführungsbeispiel eine Kugellinse 19 vorgesehen. Die Kugellinse 19 ist oberhalb des roten Halbleiterlasers 11 und des blauen Halbleiterlasers 13 angeordnet. Die Emissionspunkte 27 des roten Halbleiterlasers 11 und des blauen Halbleiterlasers 13 weisen Abstände d1, d2 von der optischen Achse der Linse 14 auf. Durch die Anordnung der Kugellinse 19 über den roten und blauen Halbleiterlasern 11, 13 kann sie in einem vorteilhaft in geringen Abstand d3 von der optischen Achse angeordnet werden, so dass die Abstände d1, d2, d3 zur optischen Achse so klein wie möglich sind.

Die Kugellinse 19 kann alternativ auch neben dem roten und blauen Halbleiterlaser 11, 13 angebracht werden. Dies hat den Vorteil, dass eine lineare Anordnung der Strahlen wie in Figur 2.5 erzielt wird.

Vor dem frequenzverdoppelten Halbleiterlaser 18 ist eine Korrektorplatte 20 angeordnet, die planar oder keilförmig ausgebildet ist und kippbar ist. Mittels der Korrektorplatte kann der Strahl des grünen Hableiterlasers 18 derart abgelenkt werden, dass der Fokus der Kugellinse 19 für den grünen Strahl auf gleicher Höhe wie die Emissionspunkte 27 des roten und des blauen Halbleiterlasers 11, 13 liegt.

Es kann auch von Vorteil sein, die Emissionspunkte 27 der roten und blauen Halbleiterlaser 11, 13 und den Fokus 27A der Kugellinse 19 nicht in einer Ebene anzuordnen. Werden die Emissionspunkte 27 der Halbleiterlaser 11, 13 oder der Fokus 27A der Kugellinse 19 in Richtung der optischen Achse der Linse 14 versetzt voneinander angeordnet, kann beispielsweise wie bei der in Fig. 8 gezeigten Ausführungsform die Dispersion der Linse 14 kompensiert werden.

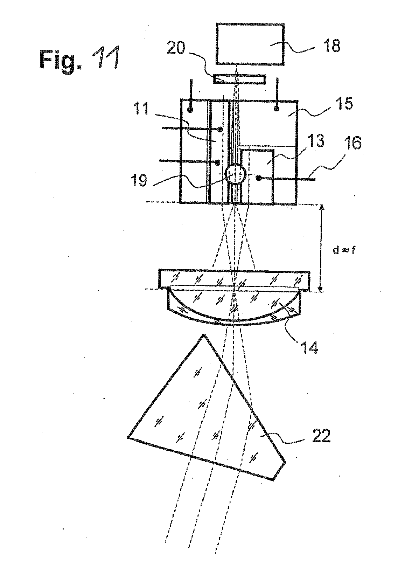

Figur 11 zeigt in einer weiteren Ausführungsform eine Abwandlung des Strahlenkombinators aus Figur 10, bei dem in dem Strahlengang ein Prisma 22 hinter der Linse 14 angeordnet ist. Mittels des Prismas 22 wird der Strahlfehlwinkel der Strahlen der Halbleiterlaser 11, 13, 18, den sie nach dem Durchlaufen der Linse 14 aufweisen, vermindert, wobei die Strahlen hinter dem Prisma 22 vorzugsweise einen Strahlfehlwinkel von nahezu gleich Null aufweisen.

Da die Strahlen nach der Linse 14 mit einem Strahlfehlwinkel $\Delta\beta 1$ auseinander laufen, ist es von Vorteil, den Strahlfehlwinkel so nahe wie möglich an der Linse 14 zu vermindern, um einen möglichst geringen Strahlversatz zu erzielen. Je näher das Prisma 22 an der Linse 14 angeordnet ist, umso kleiner ist der Strahlversatz der Strahlen auf dem Schirm.

Die Wirkungsweise des Prismas 22 basiert darauf, dass jeder der emittierten Laserstrahlen eine andere Wellenlänge aufweist. Beispielsweise weist der blaue Halbleiterlaser 13 eine Wellenlänge von 440 nm, der grüne Halbleiterlaser 18 eine Wellenlänge von 530 nm und der rote Halbleiterlaser 11 eine Wellenlänge 640 nm auf. Ein Prisma 22, das nach der Linse 14 in den Strahlengang gesetzt ist, bricht die Strahlen der drei Farben aufgrund der Dispersion unterschiedlich stark. Durch eine geeignete Wahl des optischen Glases und der Ausrichtung des Prismas 22 in Bezug auf die Linse 14 wird erreicht, dass die emittierten Strahlen nach dem Prisma 22 parallel sind.

Insbesondere kann ein Pixelabstand n der Strahlen auf dem Schirm mittels des Prismas 22 reduziert werden. Beispielsweise kann der Pixelabstand von vierundvierzig Pixeln ohne Verwendung des Prismas 22 auf drei Pixel unter Verwendung des Prismas 22 vermindert werden.

Wenn der Strahlversatz auf dem Schirm größer als der Strahlradius eines jeweiligen Strahles ist, ist es von Vorteil, wenn die Strahlen nicht parallel gerichtet werden, sondern mit einem Strahlfehlwinkel $\Delta\beta = \gamma/N$ auseinander laufen, wobei $\gamma$ der Scanwinkel und N die Anzahl der Pixel pro Zeile des Laserdisplays ist. $\Delta\beta = \gamma/N$ ist der Winkelbereich, den ein einzelnes Pixel einnimmt. Auf diese Weise wird erreicht, dass die Strahlen auch bei verschiedenen Abständen zwischen Schirm und Quelle den gleichen Abstand zueinander aufweisen. Beispielsweise ist $\Delta\beta$ bei einem Scanwinkel von 44° und einer Anzahl N von 640 Pixeln pro Zeile $\Delta\beta = 44°/640 = 0{,}07°$.

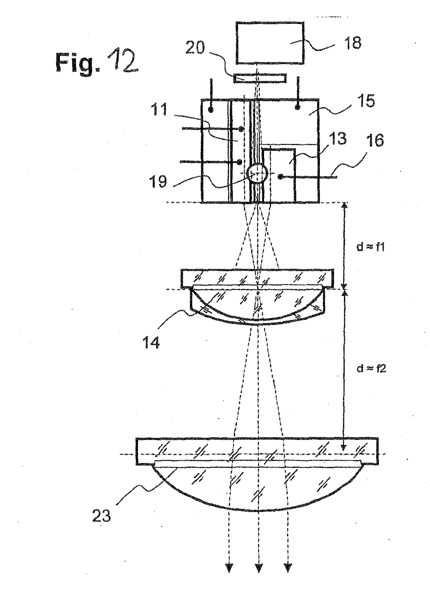

Figur 12 zeigt in einer weiteren Ausführungsform eine Abwandlung des Strahlenkombinators aus Figur 10, der zusätzlich zu der Linse 14 eine Kollimatorlinse 23 enthält.

Zum Verringern des Strahlfehlwinkels folgt der Linse 14 im Strahlengang die Kollimatorlinse 23. Der Abstand d zwischen der Linse 14 und der Kollimatorlinse 23 ist in dieser Ausführungsform vorzugsweise gleich der Brennweite f2 der Kollimatorlinse 23. Durch eine solche Anordnung werden die Strahlen bevorzugt derart gebrochen, dass sie nach dem Durchgang durch die Kollimatorlinse 23 parallel zueinander sind oder alternativ, wie im Zusammenhang mit Fig. 11 beschrieben, einen vorgegebenen Strahlfehlwinkel von $\Delta\beta = \gamma/N$ aufweisen.

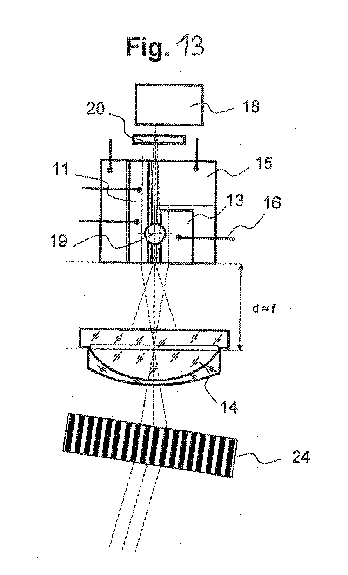

Figur 13 zeigt in einer weiteren Ausführungsform eine Abwandlung des Strahlenkombinators aus Figur 10, bei dem der Linse 14 im Strahlengang ein beugendes optisches Element 24 folgt.

Das beugende optische Element 24 beugt die Strahlen der roten, grünen und blauen Halbleiterlaser 11, 18, 13 abhängig von deren Wellenlänge, sodass sie nach dem Durchgang durch das beugende optische Element 24 parallel zueinander sind oder zum Beispiel mit einem vorgegebenen Strahlfehlwinkel $\Delta\beta = \gamma/N$ auseinander laufen.

Das beugende optische Element 24 kann ein an der Oberfläche beugendes Element, beispielsweise ein Gitter oder ein Oberflächenhologramm sein, oder ein im Volumen beugendes Element, zum Beispiel ein Volumenhologramm. Anstelle eines beugenden optischen Elements 24 kann alternativ auch eine Platte aus doppelbrechendem Material, insbesondere einem doppelbrechendem Glas, in dem Strahlengang nach der Linse 14 angeordnet werden, um die Strahlen parallel zu richten oder einen vorbestimmten Strahlfehlwinkel einzustellen.

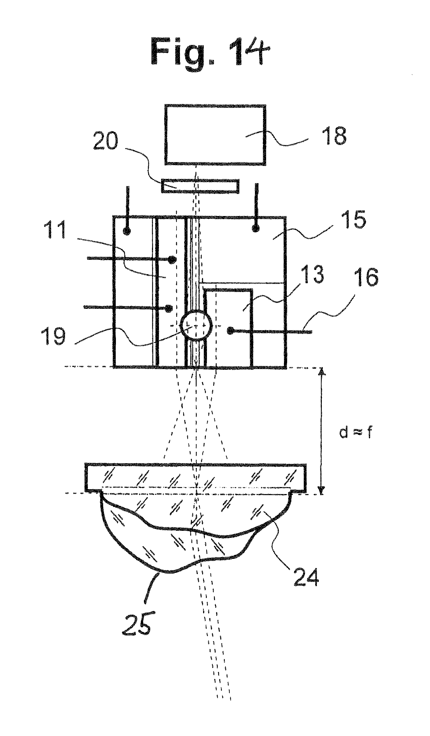

Figur 14 zeigt in einer weiteren Ausführungsform eine Abwandlung des Strahlenkombinators aus Figur 10, bei dem die Linse 14 eine Freiformfläche 25 aufweist. Die Freiformfläche ist vorzugsweise derart ausgebildet, dass die Strahlen der Halbleiterlaser 11, 13, 18 nach dem Durchgang durch die Linse 14 parallel zueinander sind. Eine geeignete Freiformfläche 25 kann in Abhängigkeit von der Anordnung der Halbleiterlaser 11, 13, 18 beispielsweise mittels Simulationsrechnungen bestimmt werden. Die Linse 14 kann auch eine achromatische Linse mit vorzugsweise zwei Freiformflächen sein.

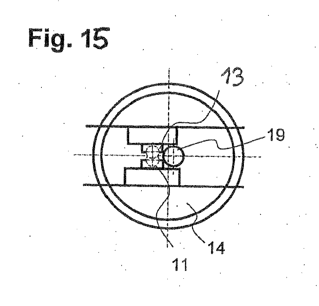

Figur 15 zeigt eine weitere Ausführungsform des Strahlenkombinators. Es ist eine Durchsicht durch die Linse 14 gezeigt. Die optische Lichtquelle des Strahlenkombinators weist zwei übereinander angeordnete Halbleiterlaser 11, 13, bei denen es sich um zwei kantenemittierende Laserdioden handelt, und einen frequenzverdoppelten Halbleiterlaser (nicht dargestellt) auf. Neben den Halbleiterlasern 11, 13 ist eine Kugellinse 19 angeordnet, die im Strahl des frequenzverdoppelten Halbleiterlasers angeordnet ist. Die Abstände der Emissionspunkte der kantenemittierenden Laser, die als Kreise eingezeichnet sind, und der Kugellinse 19 von der optischen Achse der Linse 14, die durch den Mittelpunkt der Linse 14 verläuft, sind sehr klein, vorzugsweise kleiner als 100 μm. Auf diese Weise wird ein geringer Strahlfehlwinkel Δβ und somit eine gute Strahldeckung erzielt, sodass auf einem Schirm der Strahlversatz Δx vorteilhaft klein ist.

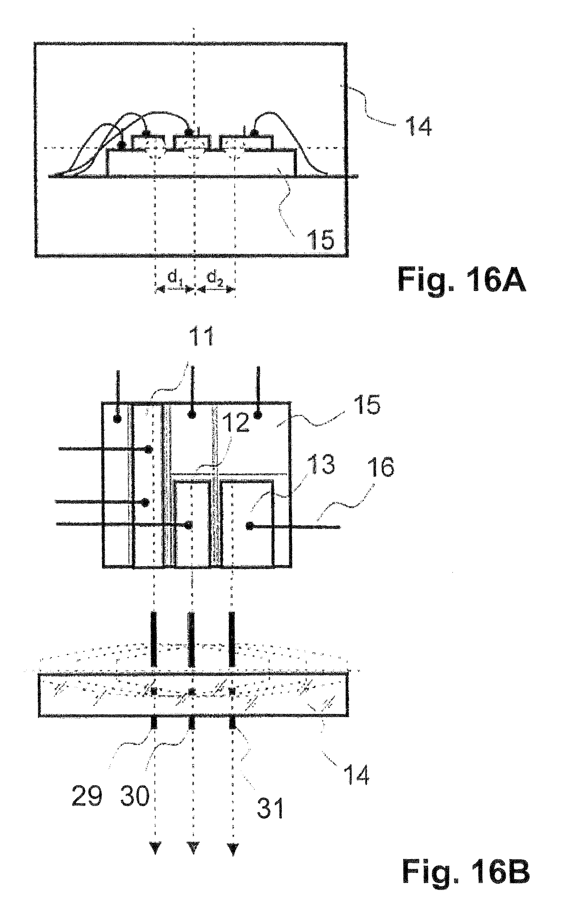

Die Figuren 16A und 16B zeigen eine weitere Ausführungsform des Strahlenkombinators, bei dem die Linse 14 ein diffraktives optisches Element ist. In Fig. 16A ist eine Durchsicht durch das als Linse fungierende diffraktive optische Element auf die optische Lichtquelle und in Fig. 16B eine Aufsicht auf den Strahlkombinator dargestellt. Die optische Lichtquelle umfasst drei Halbleiterlaser 11, 12, 13, bei denen es sich insbesondere um kantenemittierende Halbleiterlaser handelt. Bei dem diffraktiven optischen Element 14 handelt es sich vorzugsweise um eine Glas- oder Kunststoffplatte, die mit beugenden Oberflächenstrukturen versehen ist. Die Oberflächenstrukturen weisen dabei Abmessungen auf, die in der Regel kleiner sind als die Wellenlängen der Halbleiterlaser 11, 12, 13. Alternativ kann es sich bei dem diffraktiven optischen Element 14 auch um ein Volumenhologramm handeln. Die in dem oder auf dem diffraktiven optischen Element ausgebildeten Beugungsstrukturen wirken als virtuelle Linse für die von den Halbliterlasern 11, 12, 13 emittierten Laserstrahlen. Eine geeignete Oberflächenstruktur oder ein geeignetes Volumenhologramm für das diffraktive optische Element können für die gewünschten Abbildungseigenschaften der virtuellen Linse 14 mittels Simulationen berechnet werden.

Das diffraktive optische Element 14 weist bevorzugt mehrere optische Achsen 29, 30, 31 für die verschiedenen Wellenlängen der Halbleiterlaser 11, 12, 13 auf. Diese Ausgestaltung macht sich zunutze, dass die Beugungseigenschaften des diffraktiven optischen Elements 14 von der Wellenlänge des zu fokussierenden Lichts der Halbleiterlaser abhängig sind. Mittels einer geeigneten Oberflächenstruktur oder einem geeigneten Volumenhologramm kann erreicht werden, dass das diffraktive optische Element 14 mehrere optische Achsen 29, 30, 31 für die verschiedenen Emissionswellenlängen der Halbleiterlaser 11, 12, 13 aufweist.

Die mehreren optischen Achsen 29, 30, 31 sind vorteilhaft versetzt zueinander angeordnet, und zwar vorzugsweise derart, dass die optische Achse für die Wellenlänge eines jeweiligen Halbleiterlasers der optischen Lichtquelle kollinear zu der Emissionsrichtung des jeweiligen Halbleiterlasers verläuft. Beispielsweise weist das diffraktive optische Element 14 eine optische Achse 29 für die Strahlung des roten Halbleiterlasers 11 auf, wobei die optische Achse 29 kollinear zu der Emissionsrichtung des roten Halbleiterlasers 11 verläuft. Weiterhin weist das diffraktive optische Element 14 eine optische Achse 30 für die Wellenlänge des grünen Halbleiterlasers 12 auf, die kollinear zu der Emissionsrichtung des grünen Halbleiterlasers 12 verläuft und um einen Abstand d1 von der optischen Achse 29 für die Wellenlänge des roten Halbleiterlasers 11 versetzt ist. Ferner weist das diffraktive optische Element 14 eine optische Achse 31 für die Wellenlänge des blauen Halbleiterlasers 13 auf, die kollinear zu der Emissionsrichtung des blauen Halbleiterlasers 13 verläuft und um einen Abstand d2 von der optischen Achse 30 für die Wellenlänge des grünen Halbleiterlasers 12 versetzt ist. Die Wirkung des diffraktiven optischen Elements 14 entspricht somit der Wirkung von drei verschiedenen virtuellen Linsen, die in Fig. 16B durch die gestrichelten Linien angedeutet sind.

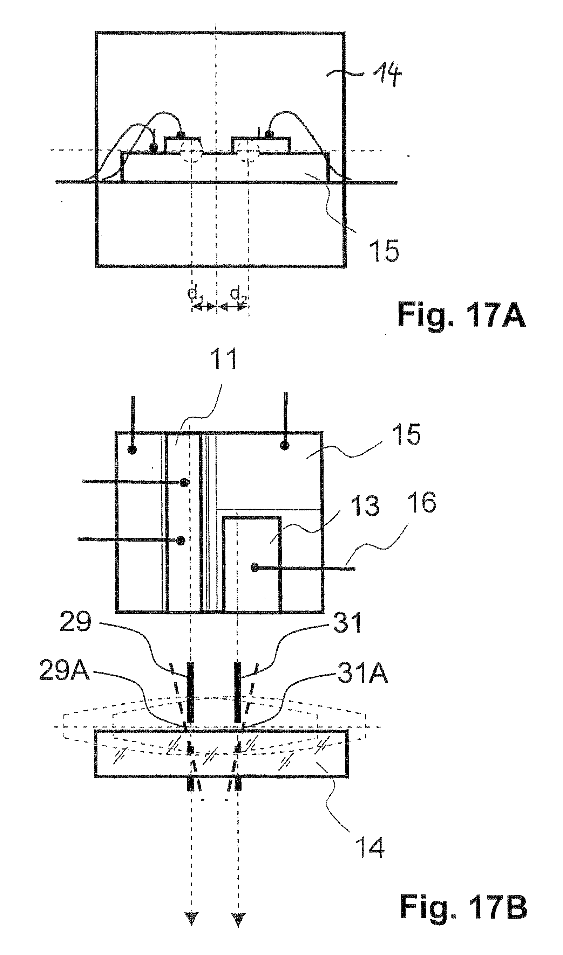

Die in den Figuren 17A und 17B dargestellte Ausführungsform des Strahlenkombinators entspricht im Wesentlichen der in den Figuren 16A und 16B dargestellten Ausführungsform, wobei aber die optische Lichtquelle anstelle von drei Halbleiterlasern nur zwei Halbleiterlaser 11, 13 enthält, nämlich einen roten Halbleiterlaser 11 und einen blauen Halbleiterlaser 13. Als Linse fungiert ein diffraktives optisches Element 14, das eine optische Achse 29 für die Wellenlänge des roten Halbleiterlasers 11 aufweist, die beispielsweise kollinear zu der Abstrahlrichtung des roten Halbleiterlasers 11 verläuft. Weiterhin weist das diffraktive optische Element eine weitere optische Achse 31 für die Wellenlänge des blauen Halbleiterlasers 13 auf, die zum Beispiel kollinear zu der Abstrahlrichtung des blauen Halbleiterlasers 11 verläuft.

Bei einer alternativen bevorzugten Ausgestaltung weist das diffraktive optische Element 14 anstelle der kollinear zu den jeweiligen Emissionsrichtungen der Halbleiterlaser 11, 13 angeordneten optischen Achsen 29, 31 die durch die gestrichelten Linien angedeuteten optischen Achsen 29A, 31A auf, die schräg zueinander und zu den jeweiligen Emissionsrichtungen der Halbleiterlaser 11, 13 verlaufen. Auf diese Weise wird erreicht, dass die Laserstrahlen der Halbleiterlaser 11, 13 nach dem Durchlaufen des diffraktiven optischen Elements 14 schräg zueinander verlaufen, wodurch quasi eine schielende optische Lichtquelle erzeugt wird. Auf diese Weise kann die Strahldeckung weiter verbessert werden.

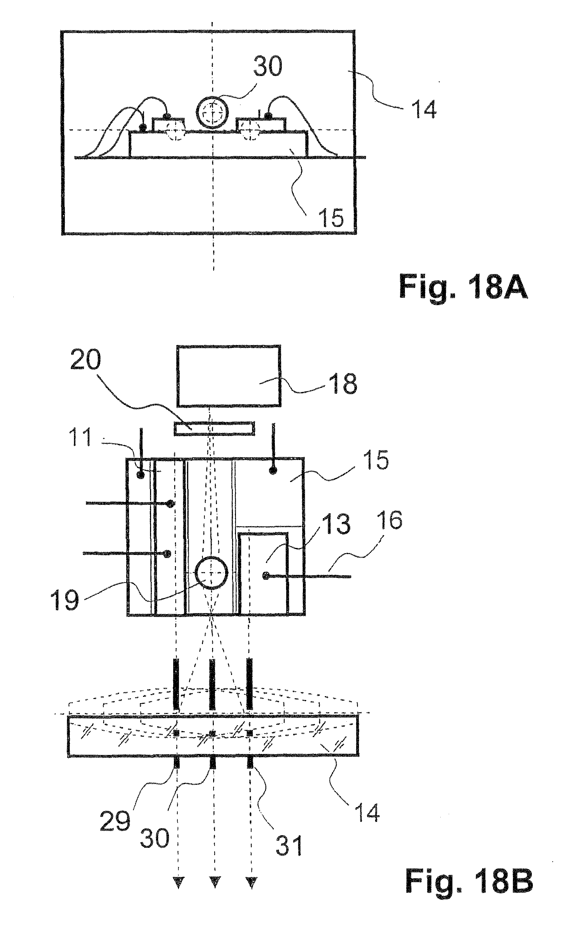

Die in den Figuren 18A und 18B dargestellte Ausführungsform entspricht im Wesentlichen der in den Figuren 16A und 16B dargestellten Ausführungsform, wobei aber die optische Lichtquelle anstelle von drei kantenemittierenden Halbleiterlasern nur zwei kantenemittierende Halbleiterlaser enthält, nämlich einen roten Halbleiterlaser 11 und einen blauen Halbleiterlaser 13, und zusätzlich einen nicht kantenemittierenden grünen Halbleiterlaser 18, der insbesondere ein frequenzverdoppelter Halbleiterlaser 18 ist. Die Ausführung und Funktionsweise der Lichtquelle entsprechen der Ausführungsform der Figur 10 und die Ausführung und Funktionsweise des als Linse fungierenden diffraktiven optischen Elements entsprechen der Ausführungsform der Figur 16. Diese werden daher an dieser Stelle nicht nochmals näher erläutert.

Die Erläuterung der Erfindung anhand der Ausführungsformen ist selbstverständlich nicht als Einschränkung auf diese zu verstehen. Vielmehr umfasst die Erfindung die offenbarten Merkmale sowohl einzeln als auch in jeder möglichen Kombination miteinander, auch wenn diese Kombinationen nicht explizit in den Ansprüchen angegeben sind.

**Patentansprüche**

1. Strahlenkombinator für ein mehrfarbiges Laserdisplay, umfassend eine optische Lichtquelle (1), die mindestens zwei Halbleiterlaser (11, 13) mit unterschiedlichen Wellenlängen aufweist,
**dadurch gekennzeichnet, dass**

   - der Strahlenkombinator eine Linse (14) aufweist und
   - die Linse (14) in einem Strahlengang angeordnet ist, der von emittierten Strahlen der mindestens zwei Halbleiterlaser (11, 13) gebildet ist.

2. Strahlenkombinator nach einem der vorigen Ansprüche,
**dadurch gekennzeichnet, dass**
die mindestens zwei Halbleiterlaser (11, 13) Emissionspunkte (27) aufweisen, die einen Abstand von weniger als 500 $\mu$m voneinander und/oder von einer optischen Achse der Linse (14) aufweisen.

3. Strahlenkombinator nach Anspruch 2,
**dadurch gekennzeichnet, dass**
die mindestens zwei Halbleiterlaser (11, 13) Emissionspunkte (27) aufweisen, die einen Abstand von weniger als 100 $\mu$m voneinander und/oder von einer optischen Achse (29) der Linse (14) aufweisen.

4. Strahlenkombinator nach einem der vorigen Ansprüche,
**dadurch gekennzeichnet, dass**
die Linse (14) in einem Abstand von 5 mm oder weniger von den Emissionspunkten (27) der Halbleiterlaser (11, 13) angeordnet ist.

5. Strahlenkombinator nach einem der vorigen Ansprüche,
**dadurch gekennzeichnet, dass**
in dem Strahlengang nach der Linse (14) ein Prisma (22) angeordnet ist.

6. Strahlenkombinator nach einem der Ansprüche 1 bis 4,
**dadurch gekennzeichnet, dass**
in dem Strahlengang nach der Linse (14) eine doppelbrechende Platte angeordnet ist.

7. Strahlenkombinator nach einem der Ansprüche 1 bis 4,
**dadurch gekennzeichnet, dass**
in dem Strahlengang nach der Linse (14) eine weitere Linse (23) angeordnet ist.

8. Strahlenkombinator nach einem der Ansprüche 1 bis 4,
**dadurch gekennzeichnet, dass**
in dem Strahlengang nach der Linse (14) ein beugendes Element (24) angeordnet ist.

9. Strahlenkombinator nach einem der vorigen Ansprüche,
**dadurch gekennzeichnet, dass**
die Linse (14) eine achromatische Linse ist.

10. Strahlenkombinator nach einem der Ansprüche 1 bis 9,
**dadurch gekennzeichnet, dass**
die Linse (14) mindestens eine Freiformfläche (25) aufweist.

11. Strahlenkombinator nach einem der Ansprüche 1 bis 8, **dadurch gekennzeichnet, dass** die Linse (14) ein als Linse fungierendes diffraktives optisches Element ist.

12. Strahlenkombinator nach Anspruch 11,
**dadurch gekennzeichnet, dass**

das diffraktive optische Element (14) für die verschiedenen Wellenlängen der Halbleiterlaser (11, 12, 13) mehrere optische Achsen (29, 30, 31) aufweist, die in lateraler Richtung zueinander versetzt sind.

**13.** Strahlenkombinator nach Anspruch 12,
**dadurch gekennzeichnet, dass**
die mehreren optischen Achsen (29, 30, 31) in lateraler Richtung derart zueinander versetzt sind, dass die optische Achse für eine Wellenlänge jeweils kollinear zu der Emissionsrichtung des Halbleiterlasers, der diese Wellenlänge emittiert, ist.

**14.** Strahlenkombinator nach einem der Ansprüche 11 bis 13,
**dadurch gekennzeichnet, dass**
das diffraktive optische Element (14) für die verschiedenen Wellenlängen der Halbleiterlaser (11, 13) verschiedene optische Achsen (29A, 31A) aufweist, die schräg zueinander angeordnet sind.

**15.** Strahlenkombinator nach einem der vorigen Ansprüche,
**dadurch gekennzeichnet, dass**
die mindestens zwei Halbleiterlaser (11, 13) mit einander zugewandten Emissionsschichten übereinander angeordnet sind.

**16.** Strahlenkombinator nach einem der Ansprüche 1 bis 14,
**dadurch gekennzeichnet, dass**
die optische Lichtquelle drei Halbleiterlaser (11, 12, 13) aufweist, die mit einander zugewandten Emissionsschichten in einem Dreieck angeordnet sind.

**17.** Strahlenkombinator nach einem der Ansprüche 1 bis 14,
**dadurch gekennzeichnet, dass**
die mindestens zwei Halbleiterlaser (11, 13) auf einem Substrat (26) nebeneinander angeordnet sind.

**18.** Strahlenkombinator nach einem der vorigen Ansprüche,
**dadurch gekennzeichnet, dass**
ein Emissionspunkt (27) von mindestens einem der Halbleiterlaser (11, 13) in einer parallel zu einer optischen Achse (29) der Linse (14) verlaufenden Richtung versetzt zu dem Emissionspunkt des mindestens einen anderen Halbleiterlasers angeordnet ist.

**19.** Strahlenkombinator nach einem der vorigen Ansprüche,
**dadurch gekennzeichnet, dass**
mindestens einer der Halbleiterlaser (11, 13) eine kantenemittierende Laserdiode ist.

**20.** Strahlenkombinator nach einem der vorigen Ansprüche,
**dadurch gekennzeichnet, dass**
mindestens zwei der Halbleiterlaser (11, 13) auf einem Substrat (26) monolithisch integriert sind.

**21.** Strahlenkombinator nach einem der vorigen Ansprüche,
**dadurch gekennzeichnet, dass**
mindestens einer der Halbleiterlaser (11, 13) ein oberflächenemittierender Halbleiterlaser (18) ist.

**22.** Strahlenkombinator nach Anspruch 21,
**dadurch gekennzeichnet, dass**
im Strahlengang des oberflächenemittierenden Halbleiterlasers (18) eine Kugellinse (19) angeordnet ist.

**23.** Strahlenkombinator nach Anspruch einem der vorigen Ansprüche,
**dadurch gekennzeichnet, dass**
mindestens einer der Halbleiterlaser ein frequenzverdoppelter Halbleiterlaser (18) ist.

**24.** Strahlenkombinator nach einem der vorigen Ansprüche,
**dadurch gekennzeichnet, dass**
der Strahlenkombinator eine Ansteuerelektronik (28) für die Halbleiterlaser (11, 13) aufweist, mit der die Halbleiterlaser (11, 13) zur Erzielung einer zumindest teilweisen Strahldeckung zeitlich versetzt ansteuerbar sind.

**25.** Mehrfarbiges Laserdisplay, umfassend einen Strahlenkombinator (1) nach einem der Ansprüche 1 bis 24.

**26.** Mehrfarbiges Laserdisplay nach Anspruch 25,
wobei das Laserdisplay einen Scanner-Spiegel (2) zum Umlenken der von den mindestens zwei Halbleiterlasern (11, 13) emittierten Laserstrahlen (5, 6) auf einen Schirm (3) aufweist.

**Fig. 1**

Fig. 2.1

Fig. 2.2

Fig. 2.3

Fig. 2.4

Fig. 2.5

n = 3

# Fig. 3A

# Fig. 3B

# Fig. 4 A

# Fig. 4B

$$d \approx f$$

$$\Delta\beta_1$$

# Fig. 5

# Fig. 6

**Fig. 7**

d ≈ f

15

16

16

21

14

**Fig. 8**

13

15

11  16

Δz

27  27

d ≈ f

14

Δβ₁

Fig. 9

Fig. 10A

Fig. 10B

**Fig.** *11*

20

18

11

15

13

16

19

$d \approx f$

14

22

**Fig. 12**

20    18

11    15

13    16

19

$d \approx f1$

14

$d \approx f2$

23

# Fig. 13

# Fig. 14

Fig. 15

$d_1$ $d_2$

**Fig. 16A**

14

15

11

15

12

13 16

29 30 31

14

**Fig. 16B**

14

15

d₁ d₂

## Fig. 17A

11

15

13 16

29 31

29A 31A

14

## Fig. 17B

Fig. 18A

Fig. 18B

**Europäisches Patentamt**

**EUROPÄISCHER RECHERCHENBERICHT**

Nummer der Anmeldung

EP 08 15 3447

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2006 301114 A (SONY CORP) 2. November 2006 (2006-11-02) * das ganze Dokument * | 1-26 | INV. G02B27/18 H04N9/31 |
| X | US 2003/011751 A1 (SAKATA HAJIME [JP] ET AL) 16. Januar 2003 (2003-01-16) * das ganze Dokument * | 1-26 | |
| A | US 5 028 802 A (WEBB ROBERT H [US] ET AL) 2. Juli 1991 (1991-07-02) | 2,3 | |
| A | KR 2003 0048862 A (LG ELECTRONICS INC [KR]) 25. Juni 2003 (2003-06-25) | 12,13 | |
| A | JP 2006 189573 A (NIPPON TELEGRAPH & TELEPHONE) 20. Juli 2006 (2006-07-20) | | |
| A | EP 1 550 923 A (HAMAMATSU PHOTONICS KK [JP]) 6. Juli 2005 (2005-07-06) | | RECHERCHIERTE SACHGEBIETE (IPC) |
| A | WO 2006/072149 A (STROBBE GRAPHICS NV [BE]; PEETERS MICHAEL [BE]; VERSCHAFFELT GUY [BE];) 13. Juli 2006 (2006-07-13) | | G02B H04N |

Der vorliegende Recherchenbericht wurde für alle Patentansprüche erstellt

| Recherchenort | Abschlußdatum der Recherche | Prüfer |
|---|---|---|
| München | 14. August 2008 | Lubach, Ernst |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 15 3447

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-08-2008

| Im Recherchenbericht angeführtes Patentdokument | Datum der Veröffentlichung | Mitglied(er) der Patentfamilie | Datum der Veröffentlichung |
|---|---|---|---|
| JP 2006301114 A | 02-11-2006 | KEINE | |
| US 2003011751 A1 | 16-01-2003 | JP 2003021800 A | 24-01-2003 |
| US 5028802 A | 02-07-1991 | AT 136442 T | 15-04-1996 |
| | | CA 2048693 A1 | 12-07-1991 |
| | | DE 69118588 D1 | 15-05-1996 |
| | | DE 69118588 T2 | 05-12-1996 |
| | | EP 0462268 A1 | 27-12-1991 |
| | | JP 4505061 T | 03-09-1992 |
| | | WO 9110394 A1 | 25-07-1991 |
| KR 20030048862 A | 25-06-2003 | KEINE | |
| JP 2006189573 A | 20-07-2006 | JP 4031481 B2 | 09-01-2008 |
| EP 1550923 A | 06-07-2005 | AU 2003262078 A1 | 30-04-2004 |
| | | CN 1682159 A | 12-10-2005 |
| | | WO 2004025380 A1 | 25-03-2004 |
| | | JP 2004102075 A | 02-04-2004 |
| | | TW 237165 B | 01-08-2005 |
| | | US 2006033972 A1 | 16-02-2006 |
| WO 2006072149 A | 13-07-2006 | EP 1834390 A1 | 19-09-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007034958
- DE 102007020289
- US 6154259 A
- US 6426781 B1